Europäisches Patentamt

European Patent Office

Office européen des brevets

(19)

(11) **EP 0 542 626 B1**

(12) # FASCICULE DE BREVET EUROPEEN

(45) Date de publication et mention
de la délivrance du brevet:
**20.03.1996 Bulletin 1996/12**

(51) Int. Cl.⁶: **B60G 9/04**, F16F 1/38,
F16F 1/44

(21) Numéro de dépôt: **92403050.5**

(22) Date de dépôt: **12.11.1992**

(54) **Système de suspension arrière à cales compensatrices pour véhicules**

Hinterachsaufhängung mit elastischen Ausgleichslagern

Rear suspension system with resilient compensating mounting

(84) Etats contractants désignés:
**DE GB IT**

(30) Priorité: **15.11.1991 FR 9114108**

(43) Date de publication de la demande:
**19.05.1993 Bulletin 1993/20**

(73) Titulaire: **HUTCHINSON**
**F-75384 Paris Cédex 08 (FR)**

(72) Inventeur: **Domer, Michel**
**F-60790 Valdampierre (FR)**

(74) Mandataire: **Picard, Jean-Claude Georges et al**
**Cabinet Plasseraud**
**84, rue d'Amsterdam**
**F-75009 Paris (FR)**

(56) Documents cités:
EP-A- 0 174 007          FR-A- 2 231 529
FR-A- 2 434 965          FR-A- 2 660 383
GB-A-  553 793           GB-A-  619 847
US-A- 2 367 833

• PATENT ABSTRACTS OF JAPAN vol. 8, no. 100
(M-295)(1537) 11 Mai 1984, &JP-A-59 014 511
(NISSAN) 25 Janvier 1984
• PATENT ABSTRACTS OF JAPAN vol. 11, no. 76
(M-569)(2523) 7 Mars 1987 & JP-A61 233 234
(HONDA) 17 Octobre 1986

## Description

La présente invention concerne un système de suspension pour véhicules, comportant deux cales compensatrices élastiques, gauche et droite, montées entre un train de suspension et la caisse d'un véhicule, chaque cale comportant une armature extérieure et une armature intérieure reliées l'une à l'autre par des blocs de matière élastomère adhérisés entre des paires de parois latérales correspondantes desdites armatures et dont l'épaisseur s'étend globalement dans un plan situé selon la direction transversale du véhicule, lesdites armatures étant reliées, l'une audit train de suspension du véhicule, l'autre à ladite caisse.

On connaît déjà les systèmes de suspension utilisant de telles cales, dans lesquelles lesdits blocs de matière élastomère sont généralement précontraints, et ceci par exemple par la demande de brevet français n° 91 04248 déposée le 8 avril 1991 au nom de la demanderesse.

Le document JP-A-59014511 (D1), correspondant au préambule de la revendication 1, enseigne l'utilisation de cales compensatrices pour systèmes de suspension de véhicules, dont la fonction est de faire pivoter les trains de suspension autour d'un axe vertical dans les virages.

Le but de la présente invention, outre la fonction isolante habituelle de ces cales, vis-à-vis des bruits et des vibrations dont il s'agit de limiter la transmission du train à la caisse, est de leur conférer le rôle supplémentaire de relever la caisse du véhicule d'un côté dans les virages, et de l'abaisser du côté opposé pour compenser, au moins en partie, l'inclinaison de la caisse, qui résulte de la force centrifuge et de l'écrasement de la suspension et des pneumatiques du côté extérieur au virage, et au contraire de leur extension de l'autre côté.

Si par exemple, pour être concret, on considère un virage à droite, la caisse devra ainsi être relevée à gauche, et au contraire être autorisée à s'abaisser à droite et vice versa, les cales fonctionnant évidemment dans les deux sens.

En d'autres termes, l'invention vise à obtenir un système passif de compensation pour stabiliser l'assiette de la caisse d'un véhicule dans les virages.

A cet effet, un système de suspension du type général défini au début sera, conformément à la présente invention, caractérisé en ce que dans une vue en coupe transversale lesdites paires de parois, considérées dans une seule et même cale montée d'un côté donné de ladite caisse, sont inclinées vers l'extérieur du véhicule et vers le haut.

On verra mieux ci-dessous, à la lecture d'un exemple de réalisation décrit avec référence aux figures du dessin ci-annexé, comment cette disposition générale de l'invention permet d'obtenir l'effet recherché.

Dans le dessin :

- la figure 1 est une vue de détail, en coupe transversale, d'une cale conforme à l'invention; et

- la figure 2 est une vue schématique d'ensemble montrant deux cales, gauche et droite, montées entre un train de suspension et la caisse d'un véhicule.

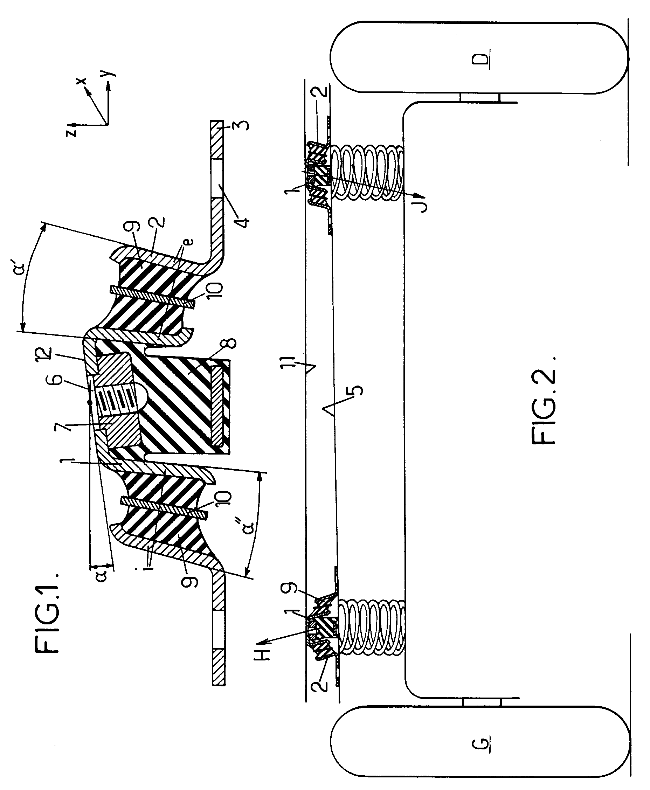

La cale représentée à la figure 1 comporte deux armatures métalliques en tôle pliée, intérieure 1 et extérieure 2, cette dernière étant pourvue de deux pattes de fixation 3 percées de trous 4, pour sa fixation sur le train de suspension arrière 5 d'un véhicule (voir aussi figure 2). L'armature centrale 1, quant à elle, est percée d'un trou 6 coaxial avec le taraudage d'un écrou 7 soudé à l'intérieur sous l'armature, et noyé dans un plot d'élastomère 8 servant à reprendre les efforts verticaux (direction z), comme dans le support qui fait l'objet de la demande mentionnée plus haut. Grâce à cet écrou, l'armature centrale 1 peut être fixée sous la caisse 11 d'un véhicule avec mise en précontrainte du plot 8. Entre les parois latérales des paires de parois extérieures e et entre les parois latérales des paires de parois intérieures i de chaque cale sont adhérisés des blocs de caoutchouc ou d'élastomère, tous référencés 9 et dans lesquels sont incluses des plaques 10 permettant d'augmenter leur raideur transversale (direction y), sans augmenter cette raideur dans la direction longitudinale x du véhicule, ceci pour la filtration des bruits de roulement. Quant à la grande raideur souhaitée en direction y, on comprend qu'elle est destinée à limiter les débattements latéraux de la caisse 11 du véhicule en virage.

Ceci étant et en considérant que les figures sont des vues de l'arrière du véhicule et que la cale de la figure 1 est la cale de droite, on voit que, conformément à l'invention, les paires de parois e et i sont inclinées pour chaque cale vers le haut et vers l'extérieur, à savoir vers la droite pour la cale droite, vers la gauche pour la cale gauche.

Grâce à cette disposition générale, et avant d'examiner d'autres dispositions annexes de l'invention, on voit que, le véhicule étant supposé en virage à droite, la caisse 11 exerce sur le train de suspension 5, par l'intermédiaire des cales susdécrites, une force sensiblement horizontale dirigée vers la gauche. Il en résulte, du fait de l'inclinaison des parois e et i et de la déformation des blocs 9, que le côté gauche de la caisse 11 va être légèrement soulevé, comme si l'armature centrale 1 de la cale de gauche était guidée en montant sur une rampe imaginaire H. Au contraire, l'inclinaison des parois e et i de la cale de droite permettra au côté droit de la caisse de s'abaisser, comme si l'armature centrale 1 de la cale de droite était guidée en descendant sur une autre rampe imaginaire J. Par suite, la caisse 11 pourra rester pratiquement horizontale en virage à droite. Il en est bien entendu de même en virage gauche, les résultantes des efforts étant symétriques par rapport au plan axial du véhicule, et les phénomènes étant évidemment les mêmes.

Quant aux dispositions annexes de l'invention, elles sont les suivantes :

la surface supérieure 12 de l'armature centrale 1 de chaque cale est, avant montage, c'est-à-dire considérée par rapport au plan des pattes de fixation 3, inclinée d'un angle α (exagéré pour la compréhension sur la figure 1) sur l'horizontale ; le sens de cette inclinaison est tel que cette surface supérieure 12 soit inclinée vers le haut et vers l'extérieur, pour chaque cale, droite (figure 1) et gauche. Par ailleurs, les surfaces des parois i ne sont pas parallèles entre elles ; il en est de même pour les parois e. Les parois intérieures i convergent légèrement vers le haut d'un angle α'', et les parois extérieures e convergent légèrement vers le bas, d'un angle α'. Les angles α' et α'' sont de préférence égaux. Ainsi, lors du montage, la descente de la caisse 11 sur les cales fera pivoter l'armature centrale 1 d'un angle α, pour ramener la surface supérieure 12 à l'horizontale. En même temps, la paroi intérieure i de cette armature centrale pivotera évidemment du même angle (dans le sens horaire pour la cale de droite), diminuant ainsi d'autant l'angle α''. Si α = α'', les deux parois i se retrouveront ainsi parallèles l'une à l'autre, la paroi i de l'armature extérieure 2 restant bien entendu immobile. De même, la paroi extérieure e de l'armature centrale pivotera encore du même angle α dans le sens horaire, diminuant ainsi d'autant l'angle α'. Si α = α', les deux parois e se retrouveront ainsi également parallèles l'une à l'autre.

Le résultat de ces pivotements est que les blocs d'élastomère 9 seront légèrement précontraints, avec en outre une compensation du retrait de moulage. Ce qui vient d'être décrit pour la cale de droite avec référence à la figure 1 est bien entendu tout aussi valable pour la cale de gauche.

## Revendications

1. Système de suspension pour véhicules, comportant deux cales compensatrices élastiques, gauche et droite, montées entre un train de suspension et la caisse d'un véhicule, chaque cale comportant une armature extérieure (2) et une armature intérieure (1) reliées l'une à l'autre par des blocs (9) de matière élastomère adhérisés entre des paires de parois latérales (i, e) correspondantes desdites armatures et dont l'épaisseur s'étend globalement dans un plan situé selon la direction transversale (y) du véhicule, lesdites armatures (1, 2) étant reliées, l'une audit train de suspension (5) du véhicule, l'autre à ladite caisse (11), caractérisé en ce que dans une vue en coupe transversale lesdites paires de parois (i, e), considérées dans une seule et même cale montée d'un côté donné de ladite caisse (11), sont inclinées vers l'extérieur du véhicule et vers le haut.

2. Système selon la revendication 1, caractérisé en ce que la surface supérieure (12) de ladite armature centrale (1) est, avant montage, inclinée sur l'horizontale, de même vers l'extérieur et vers le haut dudit côté considéré de la caisse (angle α).

3. Système selon la revendication 1 ou 2, caractérisé en ce que lesdites parois intérieures (i) des armatures convergent vers le haut (angle α''), tandis que leurs parois extérieures (e) convergent vers le bas (angle α').

4. Système selon la revendication 3, caractérisé en ce que les angles (α'', α') de convergence des parois (i, e) sont égaux.

5. Système selon les revendications 2 et 4, caractérisé en ce que lesdits angles de convergence (α'', α') sont égaux à l'angle (α) d'inclinaison sur l'horizontale de ladite surface supérieure (12) de l'armature centrale.

## Claims

1. Vehicle suspension system, comprising two resilient compensating chocks, right and left, mounted between a suspension arrangement and the body of a vehicle, each chock comprising an outer framework (2) and an inner framework (1) connected to one another by blocks (9) of elastomer material adhered between pairs of lateral walls (i, e) which correspond to said frameworks and the thickness of which extends completely in a plane extending in the transverse direction (y) of the vehicle, one of said frameworks (1, 2) being connected to said suspension arrangement (5) of the vehicle, the other to said body (11), characterised in that, viewed in transverse section, said pairs of walls (i, e), considered in one and the same chock mounted on one given side of said body (11), are slanted towards the exterior of the vehicle and towards the top.

2. System according to Claim 1, characterised in that the upper surface (12) of said central framework (1) is, prior to mounting, slanted on the horizontal, both towards the outside and towards the top of said body side in question (angle α).

3. System according to Claim 1 or 2, characterised in that the said inner walls (i) of the framework converge towards the top (angle α''), whereas the outer walls (e) thereof converge towards the base (angle α').

4. System according to Claim 3, characterised in that the angles (α'', α') of convergence of the walls (i, e) are equal.

5. System according to Claims 2 and 4, characterised in that said angles of convergence (α'', α') are equal to the angle (α) of inclination on the horizontal of said upper surface (12) of the central framework.

## Patentansprüche

1. Aufhängungssystem für Fahrzeuge, mit zwei elastischen Ausgleichslagern, links und rechts, die zwischen einer Aufhängungseinrichtung und dem Aufbau eines Fahrzeugs angebracht sind, wobei jedes Lager eine Außenarmierung (2) und eine Innenarmierung (1) umfaßt, die miteinander durch Blöcke (9) aus Elastomermaterial verbunden sind, welche zwischen den Armierungen von entsprechenden Paaren von Seitenwänden (i, e) festgehaftet sind, und deren Stärke sich im wesentlichen in einer Ebene erstreckt, die in der transversalen Richtung (y) des Fahrzeuges liegt, wobei die Armierungen (1, 2) zum einen mit der Aufhängungseinrichtung (5) des Fahrzeugs und zum anderen mit dem Aufbau (11) verbunden sind, dadurch gekennzeichnet, daß in Ansicht eines Querschnittes die Wandpaare (i, e), betrachtet in ein und demselben, an einer gegebenen Seite des Aufbaus (11) angebrachten Lager, zur Außenseite des Fahrzeugs hin und nach oben geneigt sind.

2. System nach Anspruch 1, dadurch gekennzeichnet, daß die Oberseite (12) der Zentralarmierung (1) vor einer Montage an der betrachteten Seite des Aufbaues sowohl nach außen als auch nach oben gegenüber der Horizontalen geneigt ist (Winkel $\alpha$).

3. System nach Anspruch 1 oder 2, dadurch gekennzeichnet, daß die Innenwände (i) der Armierungen nach oben konvergieren (Winkel $\alpha$"), während ihre Außenwände (e) nach unten konvergieren (Winkel $\alpha$').

4. System nach Anspruch 3, dadurch gekennzeichnet, daß die Konvergenzwinkel ($\alpha$", $\alpha$') der Wände (i, e) gleich sind.

5. System nach den Ansprüchen 2 und 4, dadurch gekennzeichnet, daß die Konvergenzwinkel ($\alpha$", $\alpha$') gleich dem Neigungswinkel ($\alpha$) gegenüber der Horizontalen der Oberseite (12) der Zentralarmierung sind.

# FIG.1.

# FIG.2.

EP 0 542 626 B1